# EUROPÄISCHE PATENTSCHRIFT

(11) **EP 3 321 647 B1**
(45) Veröffentlichungstag und Bekanntmachung des Hinweises auf die Patenterteilung: **18.08.2021**
(21) Anmeldenummer: 16197901.8
(22) Anmeldetag: 09.11.2016
(51) Int. Cl.: G01G 19/06, G01G 19/14, G01G 11/08, G01G 13/28, A22C 11/02, A22C 15/00

(54) **WÄGESYSTEM**
WEIGHING SYSTEM
SYSTÈME DE PESAGE

(43) Veröffentlichungstag der Anmeldung: 16.05.2018
(73) Patentinhaber: Albert Handtmann Maschinenfabrik GmbH & Co. KG, 88400 Biberach (DE)
(72) Erfinder: Osswald, Florian, 89079 Ulm (DE); Winghart, Robert, 89613 Oberstadion (DE); Schmid, Klaus, 88499 Riedlingen (DE); Strohm, Kurt, 88448 Attenweiler (DE); Merk, Jochen, 88416 Ochsenhausen (DE); Schliesser, Gerhard, 88489 Wain (DE)
(74) Vertreter: Grünecker Patent- und Rechtsanwälte PartG mbB

(56) Entgegenhaltungen:
- EP-A1- 2 305 043
- WO-A1-98/17119
- WO-A1-2015/156663

## Beschreibung

Die Erfindung betrifft eine Aufhängevorrichtung, eine Füllmaschine sowie ein Betriebsverfahren zum Herstellen von Würsten gemäß den Oberbegriffen der Ansprüche 1, 8 und 9.

Eine Aufhängevorrichtung gemäß dem Oberbegriff des Anspruchs 1 ist bereits aus der EP 2 305 043 A1 bekannt, die bereits ebenfalls Aufhängehaken zeigt, über die das Gewicht einer Wurst bestimmt werden kann.

Auch die WO 2015/15663 A1 beschreibt bereits eine Aufhängevorrichtung mit Haken über die zum Beispiel Hühner gewogen werden können.

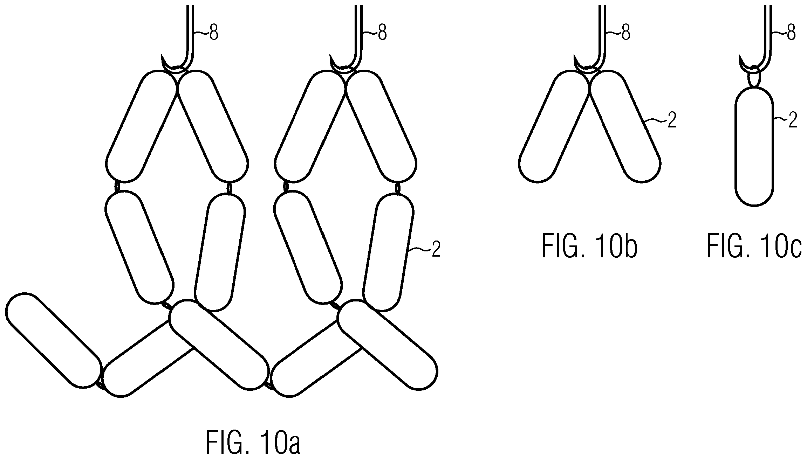

Bei der Herstellung von Würsten bzw. Wurstprodukten durch Füll- und Portioniersysteme werden Wursthüllen, z.B. Natur-, Kunst- oder Kollagendärme, mittels einer Füllmaschine, insbesondere Vakuumfüllmaschine, mit pastöser Masse gefüllt. Durch das Abdrehen des gefüllten Darms ergibt sich in der Abdrehlinie eine Wurstkette aus zusammenhängenden Einzelwürsten bzw. Portionen. Bei der Übergabe der Wurstkette auf eine Aufhängeeinheit werden vorgegebene Abteilstellen von Haken erfasst, so dass sich auf der Aufhängeeinheit aus der Wurstkette mehrere Wurstschleifen bilden (siehe z.B. Fig. 10a). Eine solche Schleife besteht aus mehreren Würsten (3-Loop, 4-Loop, in Fig. 10a 6-Loop). Es ist aber auch möglich die Würste paarweise aufzuhängen (Fig. 10b) oder Einzelwürste beispielsweise an einer Schlaufe auf einen Haken aufzuhängen (Fig. 10c).

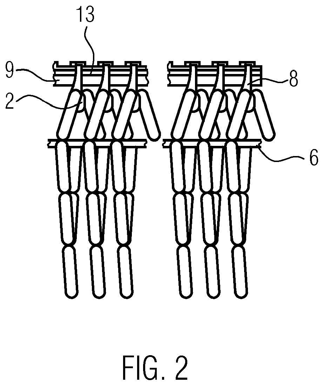

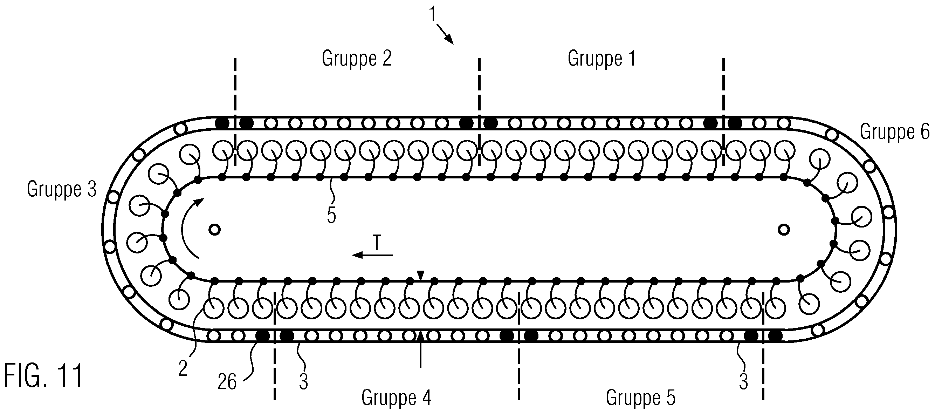

Dabei können mehrere Haken mit jeweiligen Würsten in sogenannten Wurstgruppen zusammengefasst werden, wie beispielsweise aus Fig. 11 hervorgeht. Die Wurstketten werden am Gruppenübergang getrennt und die offenen Enden der Portionen werden, wenn nötig, verschlossen (geclipt, verknotet, verschweißt). Bei der Produktentnahme aus der Aufhängeeinheit wird beispielsweise ein Rauchstock in die Wurstschleifen einer Gruppe eingeführt (eingefädelt) und anschließend der mit der Wurstschleife behängte Rauchstock aus dem Haken für die weitere Verarbeitung entnommen, wie beispielsweise aus der Fig. 2 hervorgeht.

Für eine Optimierung des Füllprozesses bzw. Produktionsablaufs mit dem Ziel, möglichst genaue Portionsgewichte, d.h. möglichst konstante Gewichte der Würste, zu erzielen, werden die Würste vor oder während der Produktentnahme in bestimmten Zeitabständen oder nach einer definierten Produktionsmenge mit Hilfe eines gesonderten Wägesystems gewogen. Dabei können einzelne oder zusammenhängende Würste oder komplett mit Wurstschleifen behängte Rauchstöcke gewogen werden. Hier können beispielsweise Stand-alone-Wägesysteme als Rauchstock-/Portionswaage verwendet werden. Das Platzangebot in der Produktionshalle ist allerdings begrenzt. Ein Stand-alone-Wägesystem benötigt zusätzlichen Platzbedarf neben dem eigentlichen Füll- und Portioniersystem. Der Maschinenbediener muss die Produkte entnehmen und zum Wägesystem laufen. Dies bedeutet eine Störung des eigentlichen Arbeitsablaufs für den Bediener und es kann zu längeren Produktionsunterbrechungen/-stopps kommen. Es gibt auch bereits Wägesysteme, die an der Produktionshallendecke befestigt sind. Eine entsprechende Platzierung bringt jedoch hohe Installationskosten mit sich. Der Aufstellungsort des Füll- und Portioniersystems ist nicht mehr flexibel. Auch an Produktionshallenwänden befestigte Wägesysteme sind nachteilig, da auch hier der Maschinenbediener die Produkte entnehmen und zum Wägesystem laufen muss. Teilweise ist nur eine Waage für mehrere Fülllinien und Maschinenbediener vorhanden. Dies bedeutet eine Störung des eigentlichen Arbeitsablaufs für den Bediener und es kann aufgrund von Wartezeiten zu Produktionsunterbrechungen bzw. - stopps kommen.

Darüber hinaus können die in Wurstschleifen auf dem Rauchstock aufgehängten Würste durch den Transport zur Waage auf dem Rauchstock verrutschen, so dass kein gleichmäßiger Abstand zwischen den Würsten gewährleistet ist, was beispielsweise nachteilig bei nachfolgenden Behandlungsschritten, wie Räuchern etc. ist, da sich die Produkte hierbei nicht berühren dürfen.

Hiervon ausgehend liegt der vorliegenden Erfindung die Aufgabe zugrunde, auf einfache Art und Weise die Portionsgenauigkeit der erzeugten Würste zu verbessern, wobei gleichzeitig der Produktionsablauf so wenig wie möglich gestört wird.

Erfindungsgemäß wird diese Aufgabe durch die Merkmale der Ansprüche 1, 8 und 9 gelöst.

Gemäß der vorliegenden Erfindung ist die Wägeeinrichtung in der Aufhängevorrichtung integriert. Somit entfällt der Transport der Würste von der Aufhängevorrichtung zur Wägeeinrichtung, was Produktionsunterbrechungen und -stopps verhindern oder zumindest wesentlich reduzieren kann. Somit kann der Füllprozess und der Produktionsablauf optimiert werden. Dadurch, dass die Wägeeinrichtung in der Aufhängeeinrichtung integriert ist, ist kein zusätzlicher Platz in der Produktionshalle für die Wägeeinrichtung notwendig. Dadurch, dass die Wägeeinrichtung in der Aufhängeeinrichtung integriert ist, entfallen zusätzliche Installationsarbeiten und Installationskosten. Insgesamt kann die Wägeeinrichtung kostengünstiger realisiert werden. Vorteilhafterweise ist damit die Wägeeinrichtung zusammen mit der Aufhängevorrichtung im Produktionsraum verfahrbar und ist nicht auf einen bestimmten Platz beschränkt. Dies bringt eine außerordentliche Flexibilität mit sich, da die Position der einzelnen Maschinen frei wählbar und veränderbar ist. Durch die integrierte Wägezelle wird der Arbeitsablauf der Bediener der Aufhängevorrichtung weniger gestört, da der Wiegevorgang direkt an der Aufhängevorrichtung durchgeführt werden kann.

Die vorliegende Erfindung erlaubt jedoch nicht nur einen manuellen Wiegevorgang, sondern auch einen halbautomatischen oder automatischen Wiegevorgang, bei denen mindestens ein Aufnahmehaken mit einer Wägezelle verbunden ist, derart, dass das Gewicht der mindestens einen Wurst oder Wurstkette am Aufnahmehaken bestimmt werden kann. Das heißt, dass das Gewicht der mindestens einen Wurst auf mindestens einem Haken auf eine Wägezelle wirkt. Dabei kann der Haken über eine Einrichtung, die den Haken hält und sein Gewicht trägt, mit der Wägezelle verbunden sein. Vorzugsweise hat diese Einrichtung zum Halten des Gewichts auch noch eine Führungsfunktion für den Haken.

Somit kann das Gewicht der mindestens einen Wurst auf mindestens einem Haken bestimmt werden, d.h. das Gewicht einer gewünschten Anzahl von Würsten, ohne dass diese vom Haken genommen werden müssen. Dies vereinfacht den Produktionsablauf wesentlich und führt zu einer außerordentlichen Leistungssteigerung und Kostenreduzierung. Es ist kein zusätzlicher Produktionsstopp, wie dies beispielsweise bei dem manuellen Wiegeverfahren vorteilhaft ist, notwendig. Da der Wiegevorgang in den Arbeitsablauf des Bedieners integriert wird, wird dieser wesentlich entlastet. Abhängig von der Länge eines Wägeabschnitts können so ein oder mehrere Haken bis zu einer ganzen Hakengruppe, die von einem Rauchstock abgenommen werden soll, gewogen werden. Ebenso ist es möglich, das Gewicht der gesamten Hakenführung zu bestimmen. Damit das Leergewicht der Haken bekannt ist, kann über eine Referenzfahrt ohne Produkte das Hakengewicht bestimmt und auf "Tara" gesetzt werden.

Gemäß einem besonders bevorzugten Ausführungsbeispiel weist die Aufhängevorrichtung eine Hakenführung auf, an der die Aufnahmehaken auf ihrer Umlaufbahn umlaufen können. Die Hakenführung hat dabei die Funktion, die Haken auf ihrer Bahn zu führen und gleichzeitig das Gewicht der Haken zu tragen. Dabei kann die Hakenführung zumindest abschnittsweise mit einer Wägezelle verbunden sein. Ist beispielsweise die gesamte Hakenführung mit einer oder mehreren Wägezellen verbunden, so kann das Gewicht aller Würste, die sich zu einem bestimmten Messzeitpunkt auf der Aufhängevorrichtung befinden, bestimmt werden. Es ist aber auch möglich, dass das Gewicht nur in einem oder mehreren Wägeabschnitten der Hakenführung bestimmt wird. Dabei umfasst die Wägeeinrichtung ein in einem Wägeabschnitt der Hakenführung integriertes und von der Hakenführung entkoppeltes Führungsteil, an dem die Aufhängehaken in dem Wägeabschnitt geführt und gehalten werden können, wobei dieses Führungsteil mit der Wägezelle verbunden ist. Somit übernimmt das eingesetzte Führungsteil die Funktionen der Hakenführung in dem Wägeabschnitt. Dadurch, dass das Führungsteil in dem Wägeabschnitt von der Hakenführung entkoppelt ist, wird ausschließlich das Gewicht der Wurst oder der Würste, die an den Haken in diesem Wägeabschnitt angeordnet sind, bestimmt. Eine entsprechende Anordnung ist besonders kostengünstig, platzsparend und einfach zu realisieren. Beim Messen kann z.B. der Transport der Aufhängehaken für einen bestimmten Messzeitraum gestoppt werden und das Gewicht der Würste an den Haken, die im Wägeabschnitt angeordnet sind, bestimmt werden. Es ist aber auch möglich, kontinuierlich während des Prozesses das Gewicht von einem oder mehreren Haken, die in einem bestimmten Zeitintervall über den Wägeabschnitt fahren, zu bestimmen. Eine entsprechende Anordnung ermöglicht ein teilautomatisches Wägesystem, bei dem der Bediener selbst den Wägevorgang einleitet, aber auch ein automatisches Wägesystem, bei dem eine Steuerung den Wägevorgang einleitet und beendet.

Gemäß einer besonderen Ausführungsform weist die umlaufende Hakenführung mindestens eine Aussparung auf, in die ein Führungsabschnitt des Führungsteils eingesetzt ist, wobei der Führungsabschnitt über einen Verbindungabschnitt mit der Wägezelle verbunden ist. Wenn eine Hakenführung verwendet wird, die den oberen Hakenbereich an zwei vertikal übereinander angeordneten Stellen führt, so ist es vorteilhaft, wenn in dem Wägeabschnitt in der Hakenführung eine obere und eine untere Aussparung vorgesehen sind, in denen jeweilige Führungsabschnitte eingesetzt sind, die dann die Funktion der eigentlichen Hakenführung übernehmen. Die jeweiligen von der restlichen Führung entkoppelten Führungsabschnitte können dann über einen Verbindungsabschnitt miteinander verbunden sein, wobei der Verbindungsabschnitt mit der Wägezelle verbunden ist. Es ist aber auch möglich, dass in dem Wägeabschnitt die Hakenführung komplett entfernt ist und das entkoppelte Führungsteil hier eingesetzt wird, um die Funktionen der Hakenführung zu übernehmen.

Gemäß der vorliegenden Erfindung weist die Aufhängevorrichtung ein umlaufendes, mit den Aufhängehaken in Eingriff stehendes Antriebselement, z.B. einen Antriebsriemen, auf. Zum Wiegen werden die zu wiegenden Aufnahmehaken vom Antriebselement abgekoppelt. Insbesondere kann dazu beispielsweise das Führungsteil zum Auskoppeln in einer Richtung quer zur Transportrichtung der Würste bewegt werden, derart, dass sich der Haken von dem Antriebselement weg bewegt. Dadurch wird der Einfluss des Antriebselementes auf den Wiegevorgang ausgeschlossen. Somit ist ein noch exakteres Wiegen der einzelnen Würste möglich. Nach dem Wiegevorgang bewegt sich beispielsweise das Führungsteil wieder zurück, so dass die Aufhängehaken wieder mit dem Antriebselement verbunden sind.

Der Wägeabschnitt weist eine Länge auf, derart, dass das Gewicht von mindestens einer Wurst an mindestens einem Aufhängehaken erfasst werden kann. Der Wägeabschnitt kann jedoch auch eine Länge aufweisen, so dass er mehrere mit Würsten behängte Aufhängehaken wiegen kann. Vorzugsweise können beispielsweise 1 bis 50 Aufhängehaken in dem Wägeabschnitt gewogen werden, wobei der Wägeabschnitt beispielsweise eine Länge von 20 mm bis 1500 mm aufweist. Somit kann beispielsweise das Gewicht einer gesamten Wurstgruppe, die von einem Rauchstock abgenommen wird, bestimmt werden.

Es ist besonders vorteilhaft, wenn die Aufhängevorrichtung eine Anzeige- und Bedieneinheit umfasst und zwar eine Anzeigeeinheit, die zusätzlich zu der Anzeige- und Bedieneinheit der Füllmaschine vorgesehen ist und beispielsweise als Touchscreen ausgebildet ist. Vorzugsweise weist diese Anzeige- und Bedieneinheit eine Eingabeeinrichtung zum Starten des Wiegevorgangs auf und/oder eine Eingabeeinrichtung zum Eingeben einer Wurstanzahl der zu wiegenden Würste oder zum Bestätigen, dass die Anzahl der zu wiegenden Würste korrekt ist. Darüber hinaus kann die Anzeige- und Bedieneinheit auch dem Bediener anzeigen, dass ein Wiegevorgang durchgeführt werden muss oder einen Wiegezeitraum angeben. Die zusätzlich vorgesehene Anzeige- und Bedieneinheit bringt den Vorteil mit sich, dass insbesondere beim manuellen und halbautomatischen System stets gewährleistet ist, dass das gewogene Gewicht sich auf die korrekte Anzahl der Würste bezieht. Somit kann die Fehlerquote deutlich reduziert werden. Somit kann sichergestellt werden, dass keine falsche Regelung des Füllprozesses stattfindet. Durch die Auswertung der Gewichtsdaten kann dann eine Regelung des Füllprozesses erfolgen.

Die Erfindung betrifft auch eine Füllmaschine mit der erfindungsgemäßen Aufhängevorrichtung nach mindestens einem der Ansprüche 1-7.

Dabei kann die Wägeeinrichtung der Aufhängevorrichtung die Signale an eine Auswerteeinheit leiten, wobei die Steuerung der Füllmaschine derart ausgebildet ist, dass die Füllparameter des Füllprozesses, insbesondere die Förderwerkleistung und/oder das Portionsvolumen (d.h., dass Volumen, dass pro Zeiteinheit oder pro Portion von der Förderpumpe ausgestoßen wird) in Abhängigkeit der erfassten Wiegesignale angepasst werden können. Durch die erfindungsgemäße Aufhängevorrichtung mit der integrierten Wägeeinrichtung ist eine exakte Bestimmung des Portionsgewichts möglich, so dass die Füllparameter exakt geregelt bzw. eingestellt werden können. Da die Wägeeinrichtung in der Aufhängevorrichtung integriert ist, die in einer Fülllinie angeordnet ist, kann die Wägeeinrichtung auf einfache Art und Weise mit der Auswerteeinheit bzw. der Steuerung der Füllmaschine kommunizieren, ohne dass es störende Kabelverbindungen oder Signalstörungen zu einer gesonderten weiter entfernten Wägeeinrichtung gibt. Somit ist eine kompakte Anordnung möglich. Die Auswerteeinheit kann beispielsweise Teil der Steuerung der Füllmaschine sein oder aber ein gesondertes Modul, das mit der Füllmaschinensteuerung kommuniziert.

Bei dem Betriebsverfahren zum Herstellen von Würsten gemäß der vorliegenden Erfindung wird für mindestens eine Wurst an mindestens einem Aufhängehaken das Gewicht über die Wägeeinrichtung an der Aufhängevorrichtung bestimmt. Wiegesignale werden von der Wägeeinrichtung bzw. deren Wägezelle an eine Auswerteeinheit geleitet. Eine entsprechende Auswerteeinheit kann das Gewicht einer Einzelwurst oder einen dazu proportionalen Wert (z.B. für mehrere Würste) ermitteln und mit einem Sollwert vergleichen. Bei Abweichung können Füllparameter, insbesondere die Förderleistung und/oder das Portionsvolumen des Füllprozesses in Abhängigkeit der erfassten Gewichtssignale angepasst bzw. geregelt werden. Somit kann eine exakte Portionsgenauigkeit realisiert werden.

Gemäß dem Verfahren kann das Gewicht der mindestens einen Wurst über eine Wägezelle bestimmt wird, während sie auf mindestens einem Haken hängt. Dies ist besonders vorteilhaft, da der Bediener dann nicht die Würste extra von den Haken nehmen muss und die Würste nach dem Wiegen zur Weiterverarbeitung nicht wieder auf die Haken hängen muss und somit der Produktionsablauf dadurch nicht gestört wird.

Vorteilhafterweise ist eine Anzeige vorgesehen, die anzeigt, dass eine Wägung durchzuführen ist. Ein entsprechender Wägezeitpunkt wird durch eine Steuerung der Füllmaschine vorgegeben. Um eine exakte Messung durchzuführen, ist vorteilhafterweise eine Eingabeeinrichtung vorgesehen, über die die Anzahl der zu wiegenden Würste eingegeben wird und/oder über die die korrekte Anzahl der zu wiegenden Würste eingegeben oder bestätigt werden kann. Vorzugsweise ist auch eine Einrichtung vorgesehen, über die der Wiegevorgang manuell gestartet wird.

Es ist aber auch möglich, dass der Wiegevorgang automatisch, vorzugsweise in bestimmten Zeitintervallen oder nach einer definierten Produktionsmenge durchgeführt wird. Ein entsprechendes automatisches Betriebsverfahren ist besonders vorteilhaft, da die Produktion kontinuierlich erfolgen kann und Fehler durch Bediener ausgeschlossen werden können. Ein automatischer Wiegevorgang führt zu deutlichen Leistungssteigerungen und Kostenreduzierung. Ein Wiegen im Durchlauf und eine kontinuierliche Auswertung dieser Wiegesignale ermöglicht eine kontinuierliche Anpassung bzw. Regelung der Füllparameter.

Gemäß einem bevorzugten Ausführungsbeispiel werden der Auswerteeinheit Gewichtssignale zugeführt sowie eine Anzahl gewogener Würste, wobei z.B. das Gewicht pro Wurst bestimmt wird (oder ein dazu proportionaler Wert z.B. für mehrere Würste) und mit einem Sollwert verglichen wird. Es werden nur dann die Füllparameter des Füllprozesses angepasst, wenn eine maximal zulässige Abweichung nicht überschritten wird. Somit kann sichergestellt werden, dass Fehler in der Anzahl der für die Auswertung herangezogenen Würste nicht zu einer unkorrekten Regelung des Füllvorgangs führen. Somit können beispielsweise Zählfehler von Bedienern kompensiert werden, aber auch beim automatischen Prozess, bei dem über eine Steuerung bestimmt wird, welche Anzahl von Würsten die Grundlage für die Auswertung darstellen, können Fehler, insbesondere am Produktionsanfang oder aber bedingt durch Wurstplatzer, Produktionsfehlern kompensiert werden. Die ermittelte Abweichung kann zum Beispiel mit einem ersten Grenzwert und einem zweiten Grenzwert verglichen werden. Bei Überschreiten eines ersten Grenzwertes soll dann das Portionsvolumen nachgeregelt werden- bei Überschreiten eines zweiten Grenzwertes, der größer ist als der erste Grenzwert soll nicht nachgeregelt werden, sondern eine Fehlermeldung ausgegeben werden oder ein weiterer Wiegevorgang mit der richtigen Stückzahl erfolgen. Dieser Fall tritt vorwiegend beim automatischen Betrieb auf.Die vorliegende Erfindung wird nachfolgend unter Bezugnahme folgender Figuren näher erläutert:
- Fig. 1: zeigt eine seitlich Gesamtansicht einer Füllmaschine mit einer Aufhängevorrichtung gemäß der vorliegenden Erfindung.
- Fig. 2: zeigt einen Ausschnitt einer Aufhängevorrichtung mit mehreren Aufnahmehaken, an denen Wurstketten in Schlaufen aufgehängt sind.
- Fig. 3: zeigt eine perspektivische Darstellung eines Beispiels einer Wägeeinrichtung, die nicht der vorliegenden Erfindung entspricht.
- Fig. 4a: zeigt schematisch eine perspektivische Darstellung einer Aufhängevorrichtung, die nicht der vorliegenden Erfindung entspricht.
- Fig. 4b: zeigt eine Vorderansicht des in Fig. 4a gezeigtennicht erfindungsgemäßen Beispiels .
- Fig. 4c: zeigt eine Draufsicht auf das in Fig. 4a und b gezeigte nicht erfindungsgemäße Beispiel
- Fig. 5: zeigt eine Anzeige für eine Aufhängevorrichtung gemäß der vorliegenden Erfindung.
- Fig. 6a: zeigt eine nicht erfindungsgemäße Wägeeinrichtung für eine Aufhängevorrichtung.
- Fig. 6b: zeigt die in Fig. 6a dargestellte Wägeeinrichtung in der Aufhängevorrichtung in einer Draufsicht.
- Fig. 6c: zeigt die in Fig. 6a dargestellte Aufhängeeinrichtung aus einer Vorderansicht.
- Fig. 7: zeigt eine Teilansicht einer Aufhängevorrichtung gemäß einem weiteren Ausführungsbeispiel der vorliegenden Erfindung.
- Fig. 7a: zeigt einen vergrößerten Ausschnitt der Fig. 7.
- Fig. 7b: zeigt eine Draufsicht auf den in Fig. 7a gezeigten Ausschnitt.
- Fig. 7c: zeigt eine Seitenansicht eines Hakens mit Wägeeinrichtung gemäß dem in Fig. 7a,b gezeigten Ausführungsbeispiel der vorliegenden Erfindung.
- Fig. 8: zeigt schematisch die Rückseite des in den Fig. 7a-c gezeigten Ausführungsbeispiels.
- Fig. 9a: zeigt eine Seitenansicht gemäß einem bevorzugten Ausführungsbeispiel einer Aufhängevorrichtung, bei dem ein Aufnahmehaken mit einem Antriebselement verbunden ist.
- Fig. 9b: zeigt das in Fig. 9a gezeigte Ausführungsbeispiel, bei dem ein Haken nicht mit dem Antriebselement verbunden ist.
- Fig. 9c: ist eine Draufsicht auf Fig. 9b.
- Fig. 10a: zeigt eine in Schleifen aufgehängte Wurstkette.
- Fig. 10b: zeigt Würste, die paarweise an einer Abteilstelle an dem Haken aufgenommen sind.
- Fig. 10c: zeigt schematisch eine Wurstportion an einer Schlaufe an einem Haken.
- Fig. 11: zeigt eine Draufsicht auf eine Aufhängevorrichtung, bei der unterschiedliche Wurstgruppen dargestellt sind.
- Fig. 12: zeigt schematisch eine Seitenansicht eines Aufnahmehakens.

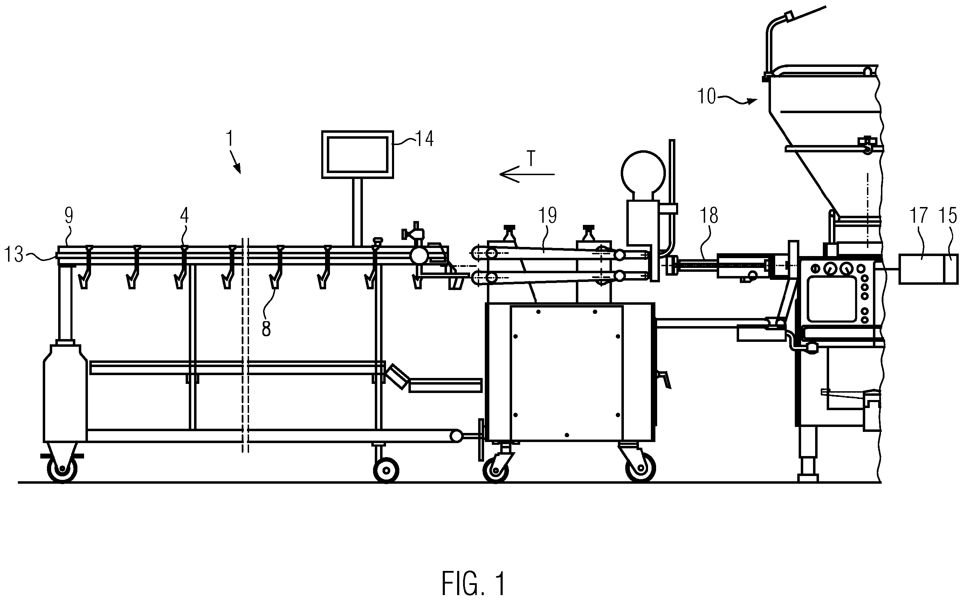

Fig. 1 zeigt die Seitenansicht einer Füllmaschine 10 gemäß der vorliegenden Erfindung, mit der in bekannter Weise Wursthüllen mit pastösem Gut über ein Füllrohr 18 befüllt werden können. Die Würste 2 werden über eine Fördereinrichtung 19 in Transportrichtung T gefördert. Hier wird als Fördereinrichtung 19 eine sogenannte Längeneinheit, die zwei umlaufende Transportbänder umfasst, verwendet. Die gefüllten Würste können an bestimmten Stellen abgedreht und unterteilt werden. Es ist auch möglich, einen kontinuierlich gefüllten Wurststrang herzustellen, der keine Abdreh- bzw. Unterteilungsstellen aufweist. Die hergestellten Würste können auch an bestimmten Stellen voneinander abgetrennt werden, so dass Wurstketten mit mehreren Würsten erzeugt werden, die dann in Gruppen auf Aufnahmehaken 8 aufgehängt werden können. Wie aus Fig. 1 hervorgeht, befindet sich in Transportrichtung hinter dem Füllrohr bzw. hier hinter der Transporteinrichtung 19 eine Aufhängevorrichtung 1, die in bekannter Weise die gefüllten Würste oder Wurstketten mit Hilfe von Aufnahmehaken 8 automatisch in Schleifen aufhängt. Die Aufhängevorrichtung 1 kann auch direkt hinter dem Füllrohr angeordnet sein. Dabei werden die Aufnahmehaken 8 über ein Antriebselement 13 beispielsweise in Form eines Riemens, einer Kette etc. in Transportrichtung bewegt, wobei die Aufnahmehaken 8 nach der Entnahme der Würste im Kreis wieder zur Aufnahmestelle zurück gefördert werden. Dabei kann eine Wurstkette (Einzelwürste in Reihe) in Schleifen auf Haken 8 aufgehängt werden oder aber es können mehrere Würste z.B. paarweise an einer Abteilstelle an einem Haken aufgenommen werden, wie in Fig. 10b gezeigt ist oder aber eine einzelne Wurst kann an einer Schlaufe aufgehängt werden, wie in Fig. 10c gezeigt ist. Wie aus Fig. 11 hervorgeht, können die produzierten Würste in Wurstgruppen 3 eingeteilt werden, wobei jede Wurstgruppe eine bestimmte Hakenanzahl umfasst. Anfang und Ende eine Wurstgruppe können durch eine Anzeigeeinrichtung 26 angezeigt werden oder aber es wird ein oder mehrere Haken zwischen den Wurstgruppen ausgespart, damit ein Bediener Anfang und Ende einer Wurstgruppe erkennen kann. Auch farbliche Markierungen der Haken sind realisierbar.

Fig. 2 zeigt in Schleifen aufgehängte Wurstketten. Zur Entnahme und zum Weiterbehandeln der Würste wird, wie aus Fig. 2 ersichtlich, ein Rauchstock 6 (entweder manuell oder automatisch über eine Vorrichtung zum Einschieben eines Rauchstocks oder ein Handhabungssystem, wie etwa einen Roboter) in die Schleifen eingeführt und nach oben entnommen.

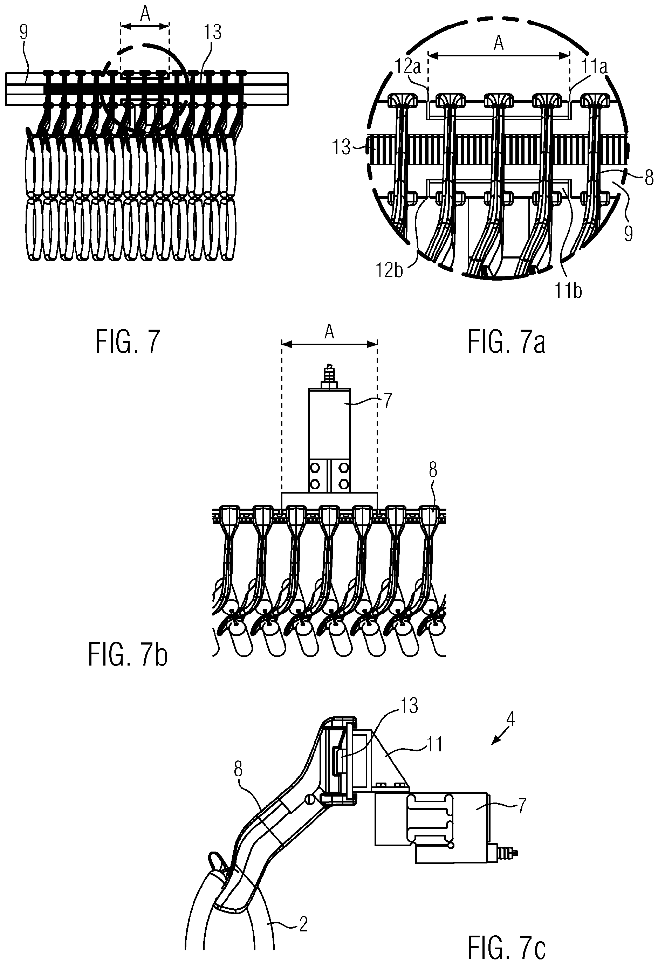

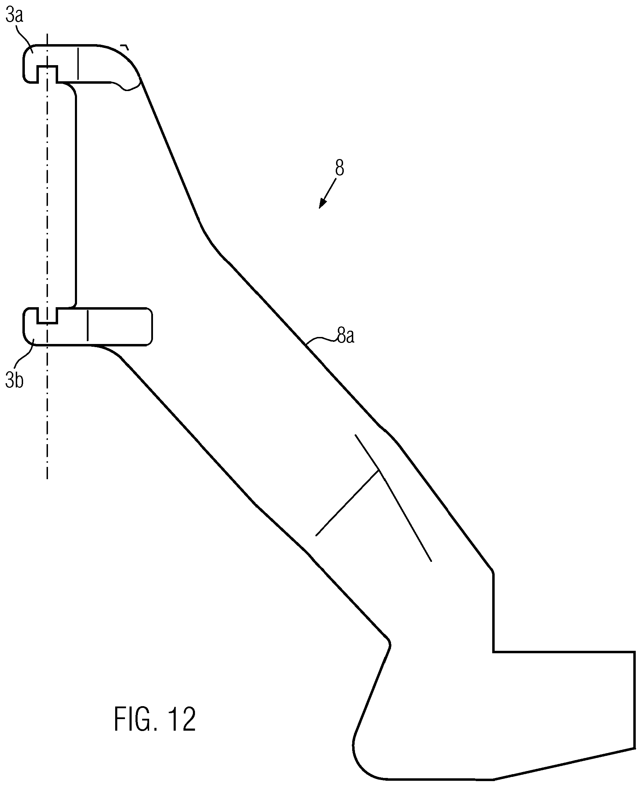

Fig. 12 zeigt einen Aufnahmehaken in größerem Detail. Der Aufnahmehaken 8 umfasst einen Tragarm 8a, der an seinem oberen Ende einen Befestigungsabschnitt 3a, 3b umfasst. Über den Befestigungsabschnitt 3a,b kann der Aufnahmehaken an der Aufhängeeinrichtung bzw. an einer Halteeinrichtung der Aufhängeeinrichtung, hier einer Hakenführung 9, befestigt werden. Dabei weist z.B. der Befestigungsabschnitt 3a, 3b eine Nut auf, in der die Hakenführung 9 (siehe z.B. Fig. 7) läuft. Die Hakenführung 9 führt den Haken in Transportrichtung T und trägt das Gewicht.

Gemäß der vorliegenden Erfindung soll nun das Portionsgewicht, d.h. das Gewicht pro produzierter Wurst (oder ein proportionaler Wert für mehrere Würste), bestimmt werden, um bei Abweichung die Füllparameter der Füllmaschine 10 entsprechend anzupassen oder zu regeln. Gemäß der vorliegenden Erfindung ist dazu eine Wägeeinrichtung 4 in die Aufhängevorrichtung 1 integriert.

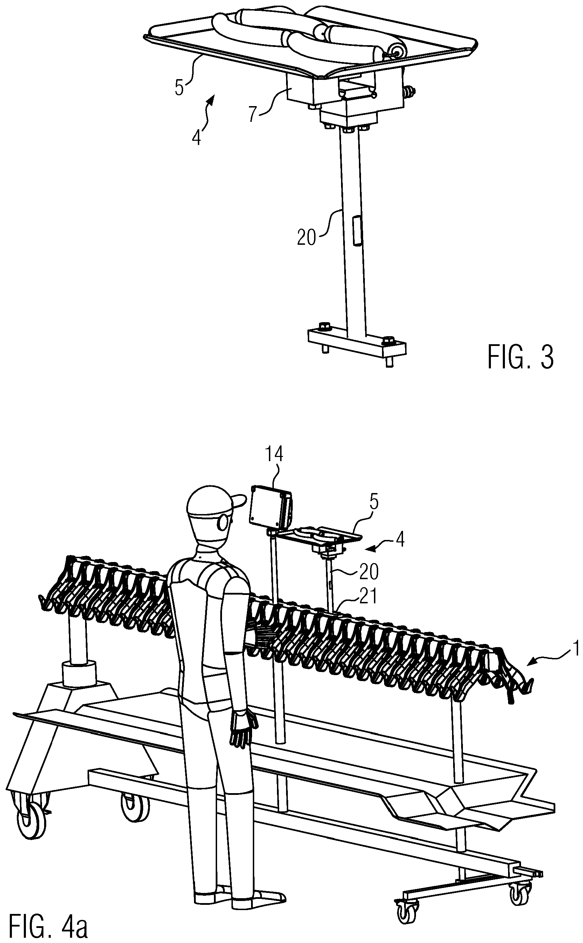

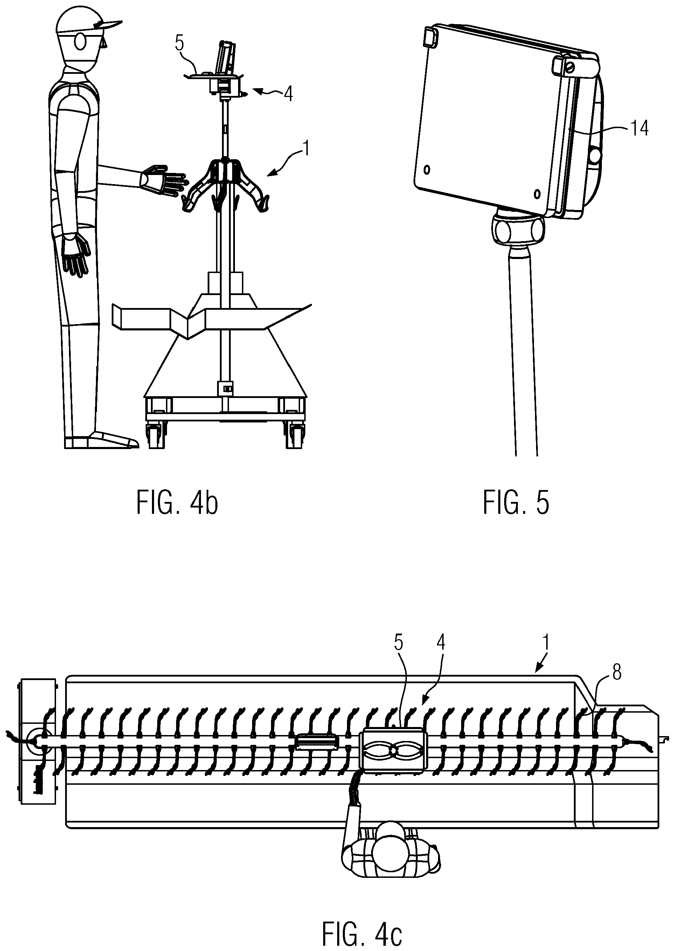

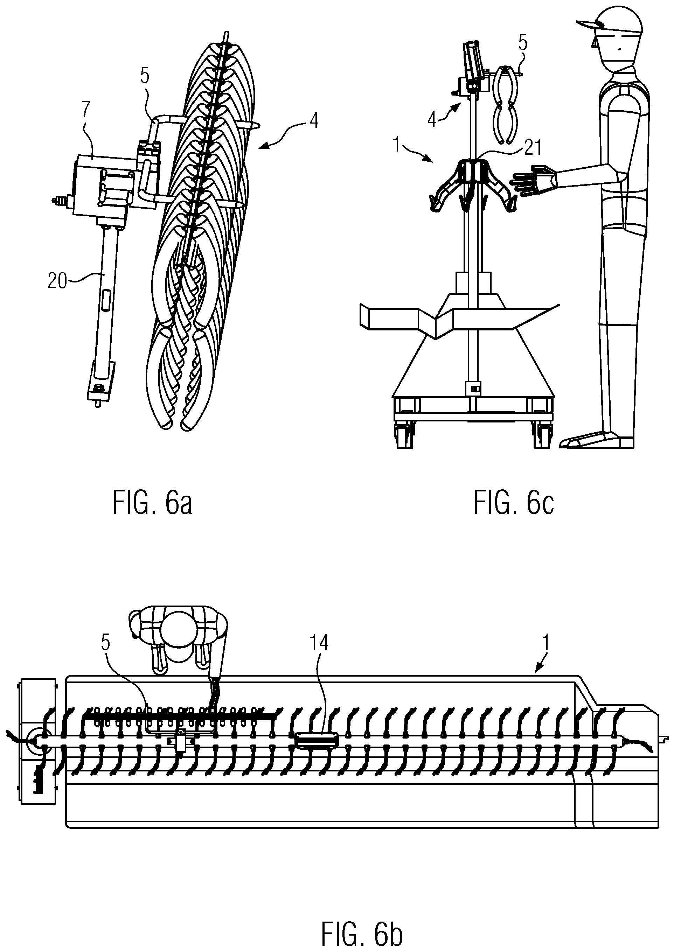

Das in den Fig. 3-6c bezieht sich auf ein manuelles nicht erfindungsgemäßes Wägesystem, bei dem ein Bediener Würste auf eine Wiegeauflage 5, die mit einer Wägezelle 7 verbunden ist, legen oder hängen muss. Hier ist die Wägezelle 7 über ein Stativ 20 fest mit der Aufhängevorrichtung 1 verbunden (siehe Ausführungsbeispiele in Fig. 3-6c). Auf der Wägezelle 7 wird z.B. als Wiegeauflage 5 ein Blech zum Wiegen von einzelnen oder zusammenhängenden Würsten 2 befestigt, wie insbesondere aus den Fig. 3, 4a-c hervorgeht. Alternativ dazu kann die Wiegeauflage derart ausgestaltet sein, dass ein Rauchstock daran aufgehängt werden kann, d.h. hier insbesondere als Gabel ausgebildet sein, wie in der Fig. 6a-c dargestellt ist. Der behängte Rauchstock kann auf die Gabel 5 aufgelegt werden, die mit der Wägezelle 7 verbunden ist.

Vorteilhafterweise ist die Wiegeauflage 5 in Vertikalrichtung betrachtet in einer Ebene über den umlaufenden Aufhängehaken 8 angeordnet. In diesem Ausführungsbeispiel ist dazu das Stativ 20 in der Mitte der Aufhängevorrichtung, d.h. hier zwischen der vorlaufenden und rücklaufenden Bahn befestigt. Hier ist das Stativ 20 z. B. an einem in Transportrichtung verlaufenden Tragebalken 21 der Aufhängevorrichtung 1 befestigt. Dadurch, dass sich die Wiegeauflage 5 in einem oberen mittleren Bereich befindet, kann der Bediener an den Haken und Würsten hantieren, während gleichzeitig in einem oberen Bereich ein Wiegevorgang erfolgt. Darüber hinaus kann, wie z.B. aus Fig. 4a und 4b hervorgeht, diese Wägeeinrichtung für beide Seiten, d.h. vordere Seite und hintere Seite der Aufhängevorrichtung, verwendet werden.

Weiter weist die Aufhängevorrichtung 1 eine Anzeige- und Bedieneinheit 14 auf, die ebenfalls an der Aufhängevorrichtung 1 befestigt ist und beispielsweise in Fig. 4a und 5 näher dargestellt ist. Die Anzeige- und Bedieneinheit 14 umfasst insbesondere eine Eingabeeinrichtung zum Starten des Wiegevorgangs und/oder eine Eingabeeinrichtung zum Eingeben einer Wurstanzahl der zu wiegenden Würste oder zum Bestätigen, dass die Anzahl der zu wiegenden Würste korrekt ist. So ist es beispielsweise möglich, dass über die Anzeige 14 dem Bediener mitgeteilt wird, dass er einen Wiegevorgang durchführen muss, bevor es über die Steuerung 17 der Füllmaschine zu einem Produktionsstopp wegen nicht durchgeführtem Wiegevorgang kommt. Wenn nicht eine komplette Wurstgruppe auf einem Rauchstock gewogen werden soll, muss der Bediener einzelne oder zusammenhängende Portionen aus der Gruppe heraustrennen, die nun offenen Enden verschließen und die Portionen dann auf die Wiegeauflage 5 ablegen. Das Trennen und Verschließen kann auch durch eine der Aufhängevorrichtung vorgelagerte Maschine oder durch eine in die Aufhängevorrichtung integrierte Vorrichtung automatisch erfolgen. Nach dem Wiegevorgang werden die Portionen der Gruppe wieder der Produktion zugeführt, um eine hohe Rauchstockauslastung zu gewährleisten. Beim Wiegen einer bestimmten Anzahl an Würsten oder beim Wiegen des mit Wurstschleifen behängten Rauchstocks muss der Bediener auf die richtige Anzahl an Würsten achten, da sonst das Messergebnis bzw. die Regelung des Füllprozesses falsch ist. Gemäß einem bevorzugten Ausführungsbeispiel kann der Bediener die Anzahl der Portionen vor dem Wiegevorgang ermitteln und in die Anzeige- und Bedieneinheit 14 eingeben. Dies ist besonders vorteilhaft, da sich die Anzeige- und Bedieneinheit 14, beispielsweise ein Touchscreen, direkt an der Aufhängevorrichtung befindet. Alternativ können diese Werte auch an der Bedieneinheit der Füllmaschine eingegeben werden. Es ist auch möglich, dass über die Anzeigeeinrichtung bereits angegeben wird, wie viele Würste zu wiegen sind und der Bediener an der Anzeige- und Bedieneinheit 14 einfach die bestimmte Anzahl der zu wiegenden Würste bestätigt. Es ist auch möglich, dass die Anzeige- und Bedieneinheit 14 eine Eingabeeinrichtung aufweist zum Starten des Wiegevorgangs. Bei der manuellen Gewichtsbestimmung wird die Aufhängevorrichtung vorzugsweise gestoppt. Die gewogenen Einzelwürste können beispielsweise wieder auf die Haken gehängt werden. Die auf einem Rauchstock gewogenen Würste können einem nachfolgenden Prozessschritt zugeführt werden.

Fig. 7-8 zeigen ein Ausführungsbeispiel gemäß der vorliegenden Erfindung, das in einer Aufhängevorrichtung integriert ist. Bei dem in den Fig. 7-8 gezeigten Ausführungsbeispiel ist die Wägeeinrichtung 4 in die Führungsbahn der Aufhängevorrichtung 1 für die umlaufenden Aufhängehaken 8 integriert, d.h., dass mindestens eine Wurst an mindestens einem Haken gewogen werden kann. Wie noch näher ausgeführt wird, bedeutet dies, dass an einem Abschnitt die Hakenführung 9 entfernt oder ausgespart ist und die fehlende Führung durch ein Führungsteil 11 ersetzt wird. Das Führungsteil 11 übernimmt dann die Funktion der Hakenführung 9, d.h. es trägt und führt die darüberlaufenden Aufhängehaken 8. Das Führungsteil 11 ist dann mechanisch fest mit einer Wägezelle 7 verbunden.

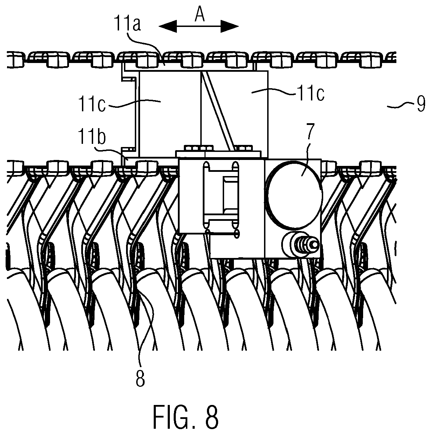

Bei dem in Fig. 7 und 8 gezeigten Ausführungsbeispiel ist in einem Wägeabschnitt A das Führungsteil 11 eingesetzt, das von der restlichen Hakenführung 9 mechanisch entkoppelt ist. Bei diesem konkreten Ausführungsbeispiel weist die Hakenführung 9 eine obere und untere Aussparung 12a,b auf, in denen jeweilige Führungsabschnitte 11a, 11b eingesetzt sind, wie insbesondere auch aus Fig. 8 hervorgeht. Die Nuten 3a,b der Haken 8 laufen über die Führungsabschnitte 11a,b, wenn sie in Transportrichtung T bewegt werden. Die Führungsabschnitte 11a,b sind hier miteinander über einen Verbindungsabschnitt 11c verbunden, der, wie aus Fig. 8 hervorgeht, mit der Wägezelle 7 verbunden ist. Dies ist nur ein bevorzugtes Ausführungsbeispiel. Es ist auch möglich, dass in dem Wägeabschnitt A die Hakenführung 9 komplett entfernt ist und durch das entkoppelte Führungsteil 11 ersetzt wird. In einer Umlaufbahn können auch mehrere Wägeabschnitte A vorgesehen sein.

Zur Gewichtsbestimmung werden die mit Würsten behängten Aufhängehaken 8 über ein Antriebselement 13, hier in Form eines Zahnriemens, über den Führungsabschnitt des Führungsteils 11 transportiert. Befindet sich der Haken im Bereich des Wägeabschnitts A, d.h. des entkoppelten Führungsteils 11, kann sein Gewicht bestimmt werden, ohne dass der Bediener das Produkt für den Wiegevorgang vom Aufnahmehaken 8 nehmen muss. Es können ein oder mehrere Haken bis zu einer ganzen Hakengruppe, aber auch alle Haken gewogen werden, abhängig von der Länge des Wiegebereichs A. Wenn nicht die ganze Hakengruppe gewogen werden soll, muss der Bediener eventuell einzelne oder zusammenhängende Würste in der Gruppe trennen und die Enden der Portionen verschließen, damit die angrenzenden nicht zu wiegenden und mit Wurstschleifen behängten Aufhängehaken 8 keinen Einfluss auf den Wiegevorgang haben. Das Trennen und Verschließen kann auch durch eine der Aufhängevorrichtung 1 vorgelagerte Maschine oder durch eine in die Aufhängevorrichtung integrierte Vorrichtung automatisch erfolgen. Damit das Leergewicht der Haken bekannt ist, kann über eine Referenzfahrt ohne Produkte das Hakengewicht eines jeden einzelnen Hakens oder auch von Hakengruppen bestimmt und auf "Tara" gesetzt werden. Somit werden bei einem Wiegevorgang nur die Würste auf den Haken gewogen. Um sicherzustellen, dass die Aufhängehaken 8 die richtige Anzahl an Würsten tragen, kann dem Bediener vor dem Wiegevorgang ein optisches Signal, z.B. eine Anzeige auf der Anzeige- und Bedieneinheit 14, angezeigt werden und mitteilen, dass der Bediener die Haken auf Vollständigkeit der Würste prüfen muss. Die zu prüfenden Haken können beispielsweise über eine optische Anzeige markiert werden oder z.B. sich farblich von den anderen Haken unterscheiden, so dass der Bediener weiß, welche Haken 8 er kontrollieren muss. Nach der Kontrolle und bei richtiger Anzahl der Portionen auf den Aufnahmehaken kann der Bediener die Anzahl bestätigen oder eventuell korrigieren und/oder mit einer Eingabeeinrichtung, z.B. einem Taster, auf einer Anzeige- und Bedieneinheit den Wiegevorgang auslösen. Nach der Auslösung erfasst die Steuerung 17 einer Füllmaschine bei der nächsten Überfahrt des oder der entsprechenden Haken über den Wägeabschnitt A das Gewicht der Würste auf dem oder den Haken durch eine oder mehrere Wägezellen 7. Eine Messung kann kontinuierlich erfolgen. Es ist aber auch möglich, dass das Antriebselement 13, d.h. hier der Zahnriemen, stoppt, um das Gewicht der Portionen auf den Aufhängehaken 8 noch genauer zu ermitteln. Die Gewichtssignale bzw. Gewichtsdaten werden dann in einer Auswerteeinheit 15 ausgewertet, wobei die Füllmenge bzw. das Füllgewicht pro Wurst oder ein dazu proportionaler Wert ermittelt werden kann. Bei Abweichung von einem Sollwert kann der Füllprozess bzw. entsprechende Füllparameter angepasst oder geregelt werden.

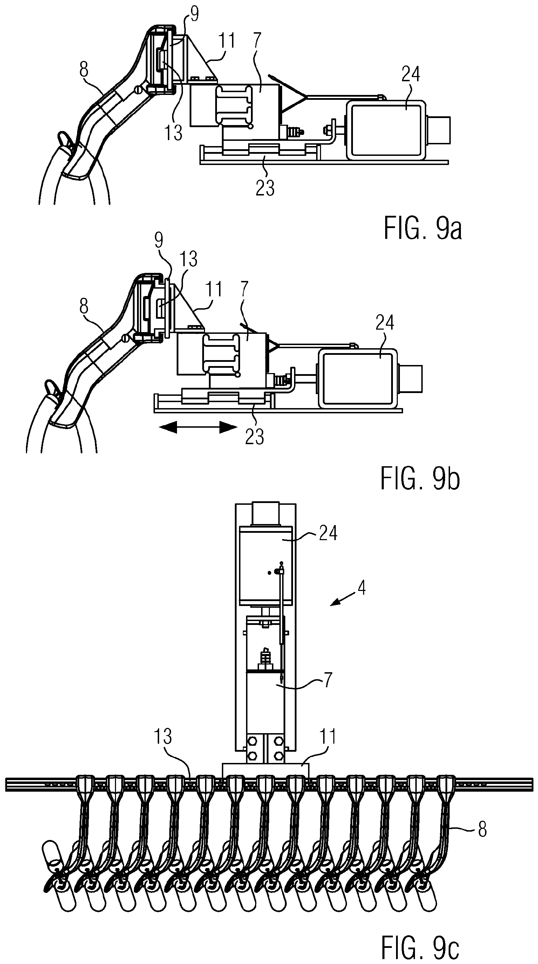

Gemäß der Erfindung wird zum Wiegen der Haken vom Antriebselement getrennt. Dazu kann das Antriebselement stoppen. Diese Ausführung entspricht ebenfalls dem in den Fig. 7-8 dargestellten Ausführungsbeispiel, wobei hier jedoch zum Wiegen die zu wiegenden Aufnahmehaken vom Antriebselement 13 abgekoppelt werden können, indem z.B. das Führungsteil 11 zum Auskoppeln in einer Richtung quer zur Transportrichtung T der Würste bewegbar ist, derart, dass sich der Aufnahmehaken 8 von dem Antriebselement 13 weg bewegt. Entsprechendes kann, wie insbesondere in den Fig. 9a,b,c dargestellt ist, mit Hilfe eines Linearaktuators, z. B. eines Hubmagneten 22 und einer Lagereinheit 23 realisiert werden. Dabei ist die Wägezelle 7 beispielsweise auf der Lagereinheit 23 verschiebbar gelagert, wobei die Lagereinheit 23 fest mit der Aufhängevorrichtung 1 verbunden ist. Über den oben genannten Hubmagneten 22 wird die Wägezelle 7 einschließlich dem Führungsteil 11 und den mit Wurstschleifen behängten Aufnahmehaken 8 von dem Antriebselement, hier dem Antriebsriemen 13, weg bewegt, so dass ein oder mehrere Haken 8 nicht mehr mit dem Antriebselement 13 verbunden sind.

Fig. 9a zeigt einen Haken, der mit dem Antriebselement 13 im oberen Bereich verbunden ist. Das Antriebselement läuft zwischen der statischen Hakenführung 9 und dem oberen Bereich der Haken 8.

Fig. 9b zeigt den von dem Antriebselement 13 weg bewegten Haken 8.

Fig. 9c zeigt eine Draufsicht auf die Haken, das Führungsteil 11, die Lagereinheit und den Hubmagneten. Durch das Trennen des Hakens von dem Antriebselement 13 wird ein Einfluss des Antriebselements 13 auf den Wiegevorgang ausgeschlossen. Damit dies umgesetzt werden kann, kann das Antriebselement 13 stoppen, bevor der Magnet 22 eine Bewegung auslöst. Nach dem Wiegevorgang bewegt sich die Wägezelle 7 inklusive Führungsteil 11, Haken 8 und

Würste 2 auf der Lagereinheit zurück, so dass der oder die Haken wieder mit dem Antriebselement 13 verbunden sind und weiter transportiert werden können.

Der zuvor beschriebene Aufbau der Wägeeinrichtung 4 ist für ein teilautomatisches Wägesystem geeignet, bei dem der Bediener den Wiegevorgang auslösen kann. Der zuvor gezeigte Aufbau ist aber auch ganz besonders geeignet für ein automatisches Wägesystem, d.h. zum Wiegen im Durchlauf. Beim automatischen Wägesystem muss der Bediener keinen Wiegevorgang auslösen. Der Wiegevorgang wird in bestimmten Zeitabständen und/oder nach einer definierten Produktionsmenge automatisch durchgeführt. Ebenso ist es möglich, dass bei allen Aufhängehaken 8 und bei jeder Überfahrt der Haken über einen Wägeabschnitt A das Gewicht der Würste auf den Haken erfasst wird. Damit die ermittelten Gewichtsdaten mit der Anzahl der Portionen verrechnet werden können, kann z.B. in der Maschinensteuerung eine bestimmte Anzahl an Portionen, die zur Auswertung herangezogen werden, hinterlegt sein. In der Steuerung wird dazu eine entsprechende Anzahl von Haken hinterlegt oder aber z.B. berechnet, wieviele Haken in einem Messzeitraum gewogen werden. Der Auswerteeinheit 15 können die Gewichtssignale zugeführt werden und die Anzahl der zu wiegenden Würste. Eine Abweichung eines für eine Wurst (oder für mehrere Würste) ermittelten Gewichts von einem Sollwert kann bestimmt werden und mit einer maximal zulässigen Abweichung verglichen werden. Die Füllparameter des Füllprozesses werden nur dann angepasst, wenn die maximal zulässige Abweichung nicht überschritten wird. Ist die Prüfung in Ordnung, werden die Gewichtssignale ausgewertet und gegebenenfalls eine Regelung des Füllprozesses für genauere Portionsgewichte veranlasst. Ist die Prüfung nicht in Ordnung, muss ein weiterer Wiegevorgang durchgeführt werden.

Es können ein oder mehrere Haken, eine ganze Hakengruppe oder alle Haken auf der Aufhängevorrichtung gewogen werden. Wenn nicht die ganze Hakengruppe gewogen werden soll, muss der Bediener eventuell einzelne oder zusammenhängende Portionen in der Gruppe trennen und die Enden verschließen, damit die nicht zu wiegenden, mit Wurstschleifen behängten Haken keinen Einfluss auf den Wiegevorgang haben. Durch ein z.B. optisches Signal oder eine Anzeige auf einer Anzeige- und Bedieneinheit kann der Bediener auf das Trennen und Verschließen vor dem Wiegevorgang hingewiesen werden. Das Trennen und Verschließen kann auch durch eine der Aufhängevorrichtung vorgelagerte Maschine oder durch eine in die Aufhängevorrichtung integrierte Vorrichtung automatisch erfolgen. Der Wiegevorgang kann auch in diesem Ausführungsbeispiel im Durchlauf stattfinden oder das Antriebselement 13 kann gestoppt werden, um das Gewicht der Portionen auf den Haken zu ermitteln, wie zuvor beschrieben. Idealerweise werden nämlich auch hier die Haken vom Antriebselement 13 zur Gewichtsbestimmung getrennt.

Bei dem erfindungsgemäßen Betriebsverfahren wird also für mindestens eine Wurst an mindestens einem Aufhängehaken 8 das Gewicht über die Wägeeinrichtung 4 in der Aufhängevorrichtung 1 bestimmt. Wiegesignale werden an eine Auswerteeinheit 15 geleitet und Füllparameter, insbesondere Förderwerksleistung bzw. das Portionsvolumen des Füllprozesses werden in Abhängigkeit der erfassten Gewichtssignale angepasst. Das heißt, wenn beispielsweise das Portionsgewicht einer Wurst zu gering ist, wird die Fördermenge pro Zeit einer Pumpe entsprechend heraufgesetzt um das fehlende Gewicht zu kompensieren. Die erfindungsgemäße Wiegeeinrichtung 4 ist vollständig in die Füllmaschine zur Wurstproduktion integriert und fest mit der Aufhängevorrichtung verbunden, so dass kein weiterer Bauraum in der Produktionshalle benötigt wird. Durch die Montage der Wägeeinrichtung innerhalb der Aufhängevorrichtung ist die Wägeeinrichtung 4 örtlich flexibel einsetzbar. Durch die integrierte Wägeeinrichtung 4 wird der Arbeitsablauf der Bediener beim Wiegen weniger gestört, da er den Wiegevorgang direkt an der Aufhängevorrichtung durchführen kann. Eine gegebenenfalls optische Anzeige auf einer Anzeige- und Bedieneinrichtung 14 verhindert zusätzliche Produktionsstopps. Wie zuvor beschrieben, ist beim automatischen Betrieb kein Anhalten notwendig. Bei einem teilautomatischen und automatischen Betrieb muss der Bediener keine Produkte mehr zum Wiegen aus der Aufhängevorrichtung 1 entfernen und danach wieder hinzufügen, sondern kann einen Rauchstock nach dem Wiegevorgang (ohne vorheriges Wiegen (Tara) des Rauchstocks) durch die Wurstschleifen einfädeln und den mit Wurstschleifen behängten Rauchstock in den Rauchwagen ablegen. Dies führt zu einer Entlastung der Bediener bzw. zu einer Leistungssteigerung und Kostenreduzierung.

Durch die Auswertung und Regelung der Gewichtssignale durch eine Auswerteeinheit 15, insbesondere eine entsprechende Softwaresteuerung, ergibt sich ein vollständig integriertes Wägesystem innerhalb eines Füll- und Portioniersystems für Wurstprodukte.

Zuvor wurde das Entkoppeln der Aufnahmehaken 8 vom Antriebselement 13 durch das linear bewegliche Führungsteil 11 beschrieben. Gleichermaßen sind jedoch andere Auskopplungsmechanismen durch Drehbewegung, Kurvenbahn etc. kraft- und/oder formschlüssig denkbar. Alternativ zu dem in dem zuvor genannten Ausführungsbeispiel verwendeten Hubmagneten kann selbstverständlich auch ein anderes Stellglied zum Abkoppeln des mindestens einen Hakens vom Antriebselement verwendet werden. Erfolgt die Mitnahme der Haken durch ein Antriebselement (Riemen, Ketten oder Ähnliches) mit flexiblen Schlitzen/Nuten, so kann eine Entkopplung in einer Umlenkung stattfinden, da sich durch das Spreizen der Schlitze/Nuten in der Umlenkung die Schlitz-/Nutbreite vergrößert und somit die Reibung zwischen den Haken und dem Antriebselement reduziert. Die Ermittlung bzw. Kontrolle der Anzahl der Würste kann auch automatisiert werden, d.h. dass eine optische Einrichtung vorgesehen ist (wie z.B. ein Kamerasystem oder ein Näherungsschalter) oder mechanische Sensoren (z.B. Schaltnocken) zum Ermitteln der Anzahl der Haken und/oder Würste, die gewogen werden sollen.

## Patentansprüche

1. Aufhängevorrichtung (1) zum Aufhängen von Würsten (2), insbesondere Wurstketten, mit mehreren umlaufenden Aufhängehaken (8), wobei
die Aufhängevorrichtung (1) eine integrierte Wägeeinrichtung (4) zum Wiegen mindestens einer Wurst (2) oder mindestens einer Wurstkette (2) umfasst,
wobei mindestens ein Aufnahmehaken (8) mit einer Wägezelle (7) verbunden ist, derart, dass das Gewicht der mindestens einen Wurst oder Wurstkette am Aufnahmehaken (8) bestimmt werden kann, **dadurch gekennzeichnet, dass** die Aufhängevorrichtung (1) ein umlaufendes, mit den Aufhängehaken (8) in Eingriff stehendes Antriebselement (13) aufweist, wobei zum Wiegen die zu wiegenden Aufnahmehaken vom Antriebselement (13) abgekoppelt werden können.

2. Aufhängevorrichtung (1) nach Anspruch 1, **dadurch gekennzeichnet, dass** die Aufhängevorrichtung (1) eine Hakenführung (9,11) aufweist, an der die Aufnahmehaken (8) auf ihrer Umlaufbahn umlaufen können, wobei die Hakenführung (11) zumindest abschnittsweise mit einer Wägezelle (7) verbunden ist.

3. Aufhängevorrichtung (1) nach mindestens Anspruch 2, **dadurch gekennzeichnet, dass** die Wägeeinrichtung (4) ein in einem Wägeabschnitt (A) der Hakenführung (9) integriertes und von der Hakenführung (9) entkoppeltes Führungsteil (11) umfasst, an dem die Aufhängehaken (8) in dem Wägeabschnitt (A) geführt und gehalten werden können, wobei das Führungsteil (11) mit der Wägezelle (7) verbunden ist.

4. Aufhängevorrichtung (1) nach mindestens einem der Ansprüche 1-3, **dadurch gekennzeichnet, dass** die umlaufende Hakenführung (9) in dem Wägeabschnitt (A) mindestens eine Aussparung (12) aufweist, in die ein Führungsabschnitt (11a,b) des Führungsteils (11) eingesetzt ist, wobei der Führungsabschnitt (11a,b) über einen Verbindungsabschnitt (11c) mit der Wägezelle (7) verbunden ist, wobei insbesondere in dem Wägeabschnitt (A) in der Hakenführung (9) eine obere und untere Aussparung (12a,b) vorgesehen sind, in denen jeweilige Führungsabschnitte (11a,b) eingesetzt sind, die über den Verbindungsabschnitt (11c) miteinander verbunden sind oder in dem Wägeabschnitt (A) die Hakenführung (9) komplett entfernt ist und durch das entkoppelte Führungsteil (11) ersetzt wird.

5. Aufhängevorrichtung (1) nach mindestens Anspruch 1-4, **dadurch gekennzeichnet, dass** das Führungsteil (11) zum Auskoppeln in einer Richtung quer zur Transportrichtung (T) der Würste bewegbar ist, derart, dass sich der jeweilige Haken von dem Antriebselement (13) weg bewegt.

6. Aufhängevorrichtung (1) nach mindestens einem der vorhergehenden Ansprüche, **dadurch gekennzeichnet, dass** ein Wägeabschnitt (A) eine Länge aufweist, derart, dass das Gewicht der mindestens einen Wurst an mindestens einem Aufhängehaken (8) erfasst werden kann, vorzugsweise an 1 bis 50 Aufhängehaken (8).

7. Aufhängevorrichtung (1) nach mindestens Anspruch 1-6, **dadurch gekennzeichnet, dass** die Aufhängevorrichtung (1) eine Anzeige- und/oder Bedieneinheit (14) umfasst, insbesondere eine Eingabeeinrichtung zum Starten des Wiegevorgangs und/oder eine Eingabeeinrichtung zum Eingeben einer Wurstanzahl der zu wiegenden Würste oder zum Bestätigen, dass die Anzahl der zu wiegenden Würste korrekt ist und/oder die anzeigt, dass ein Wiegen stattfindet, insbesondere einen Wiegezeitraum.

8. Füllmaschine (10) mit einer Aufhängevorrichtung (1) nach mindestens einem der Ansprüche 1-7, **dadurch gekennzeichnet, dass** die Wägeeinrichtung (4) Wiegesignale an eine Auswerteeinheit (15) leiten kann, wobei die Steuerung (17) der Füllmaschine derart ausgebildet ist, dass die Füllparameter des Füllprozesses, insbesondere die Förderwerksleistung und/oder das Portionsvolumen in Abhängigkeit der erfassten Wiegesignale angepasst werden können.

9. Betriebsverfahren zum Herstellen von Würsten mit einer Füllmaschine nach Anspruch 8, wobei für mindestens eine Wurst (2) an mindestens einem Aufhängehaken (8) das Gewicht über die Wägeeinrichtung (4), die in der Aufhängevorrichtung integriert ist, bestimmt wird, Wiegesignale an eine Auswerteeinheit (15) geleitet werden, und
Füllparameter, insbesondere Förderwerksleistung, bzw. das Portionsvolumen des Füllprozesses in Abhängigkeit der erfassten Gewichtssignale angepasst werden, und das Gewicht der mindestens einen Wurst (2) über eine Wägezelle (7) bestimmt wird, während sie auf mindestens einem Haken (8) hängt, wobei die Aufhängevorrichtung (1) ein umlaufendes, mit den Aufhängehaken (8) in Eingriff stehendes Antriebselement (13) aufweist, wobei zum Wiegen die zu wiegenden Aufnahmehaken vom Antriebselement (13) abgekoppelt werden.

10. Betriebsverfahren nach Anspruch 9, **dadurch gekennzeichnet, dass** eine Anzeige (14) anzeigt, dass eine Wägung durchzuführen ist und insbesondere über eine Eingabeeinrichtung (14) die Anzahl der zu wiegenden Würste eingegeben wird und/oder über eine Eingabeeinrichtung (14) die korrekte Anzahl von zu wiegenden Würsten eingegeben oder bestätigt wird, wobei vorzugsweise eine Einrichtung vorgesehen ist, über die der Wiegevorgang manuell gestartet wird .

11. Betriebsverfahren nach mindestens einem der Ansprüche 9-10, **dadurch gekennzeichnet, dass** der Wiegevorgang automatisch, vorzugsweise in bestimmten Zeitintervallen oder nach einer definierten Produktionsmenge durchgeführt wird.

12. Betriebsverfahren nach mindestens einem der Ansprüche 9-11, **dadurch gekennzeichnet, dass** einer Auswerteeinheit (15) Gewichtsignale zugeführt werden und eine Anzahl gewogener Würste, wobei eine Abweichung eines für eine bestimmte Wurstanzahl ermittelten Gewichts von einem Sollwert bestimmt wird, und ein Anpassen der Füllparameter nur erfolgt, wenn eine maximal zulässige Abweichung nicht überschritten wird, wobei dazu insbesondere
die ermittelte Abweichung mit einem ersten Grenzwert und einem zweiten Grenzwert, der größer als der erste Grenzwert ist, verglichen wird.

## Claims

1. A suspension device (1) for suspending sausages (2), in particular sausage chains, comprising a plurality of circulating suspension hooks (8), wherein
the suspension device (1) comprises an integrated weighing unit (4) for weighing at least one sausage (2) or at least one sausage chain (2),
wherein at least one suspension hook (8) is connected to a weighing cell (7) such that the weight of the at least one sausage or sausage chain can be determined on the suspension hook (8) **characterized in that** the suspension device (1) comprises a circulating drive element (13) in engagement with the suspension hooks (8), wherein, for the purpose of weighing, the suspension hooks to be weighed can be decoupled from the drive element (13) .

2. The suspension device (1) according to claim 1, **characterized in that** the suspension device (1) comprises a hook guide (9, 11) on which the suspension hooks (8) can circulate on their circulatory path, the hook guide (11) being, at least sectionwise, connected to a weighing cell (7).

3. The suspension device (1) according to claim 2, **characterized in that** the weighing unit (4) comprises a guide piece (11) integrated in a weighing section (A) of the hook guide (9) and decoupled from the hook guide (9), the suspension hooks (8) being adapted to be guided and held on said guide piece (11) in the weighing section (A) and the guide piece (11) being connected to the weighing cell (7).

4. The suspension device (1) according to at least one of the claims 1 to 3, **characterized in that** the circumferentially extending hook guide (9) comprises in the weighing section (A) at least one recess (12), which has inserted therein a guide section (11a,b) of the guide piece (11), said guide section (11a,b) being connected to the weighing cell (7) through a connecting portion (11c), wherein, especially in the weighing section (A), the hook guide (9) is provided with an upper and a lower recess (12a,b) having inserted therein respective guide sections (11a,b) interconnected via the connecting portion (11c) or wherein the hook guide (9) is completely removed in the weighing section (A) and replaced by the decoupled guide piece (11).

5. The suspension device (1) according to at least one of the claims 1 to 4, **characterized in that** the guide piece (11) can be moved in a direction transversely to the conveying direction (T) of the sausages for the purpose of decoupling, such that the respective hook will move away from the drive element (13).

6. The suspension device (1) according to at least one of the preceding claims, **characterized in that** the weighing section (A) has a length of such a nature that the weight of the at least one sausage can be determined on at least one suspension hook (8), preferably on 1 to 50 suspension hooks (8).

7. The suspension device (1) according to at least one of the claims 1 to 6, **characterized in that** the suspension device (1) comprises a display and/or operating unit (14), in particular an input device for starting the weighing process and/or an input device for entering the number of the sausages to be weighed or for confirming that the number of sausages to be weighed is correct, and/or said display and/or operating unit (14) displaying that weighing takes place, in particular a weighing period.

8. A filling machine (10) comprising a suspension device (1) according to at least one of the claims 1 to 7, **characterized in that** the weighing unit (4) is able to transmit weighing signals to an evaluation unit (15), the control unit (17) of the filling machine being configured such that the filling parameters of the filling process, in particular the performance of the conveyor and/or the portion volume, can be adapted depending on the weight signals detected.

9. An operating method for producing sausages with a filling machine according to claim 8, wherein for at least one sausage (2) on at least one suspension hook (8) the weight is determined through the weighing unit (4) integrated in the suspension device,
weighing signals are transmitted to the evaluation unit (15), and
filling parameters, in particular the performance of the conveyor and/or the portion volume of the filling process, are adapted depending on the weight signals detected, and
the weight of the at least one sausage (2) is determined via a weighing cell (7) while said sausage is suspended from at least one hook (8) wherein
the suspension device (1) comprises a circulating drive element (13) in engagement with the suspension hooks (8), wherein, for the purpose of weighing, the suspension hooks to be weighed are decoupled from the drive element (13).

10. The operating method according to claim 9, **characterized in that** a display (14) displays that weighing will have to be carried out and that, in particular, the number of sausages to be weighed is entered via an input device (14) and/or that the correct number of sausages to be weighed is entered or confirmed via an input device (14), a unit being preferably provided through which the weighing process is manually started.

11. The operating method according to at least one of the claims 9 to 10, **characterized in that** the weighing process is carried out automatically, preferably at certain time intervals or after a defined production volume.

12. The operating method according to at least one of the claims 9 to 11, **characterized in that** an evaluation unit (15) has supplied thereto weight signals and a number of sausages weighed, wherein a deviation of a weight, which has been determined for a specific number of sausages, from a target value is determined and the filling parameters will only be adapted, if a maximum admissible deviation is not exceeded, wherein, to this end,
the determined deviation is in particular compared with a first limit value and a second limit value, which is higher than the first limit value.

## Revendications

1. Dispositif de suspension (1) permettant de suspendre des saucisses (2), en particulier des chapelets de saucisses, avec plusieurs crochets de suspension (8) circulants, dans lequel
le dispositif de suspension (1) comprend un appareil de pesage (4) intégré permettant de peser au moins une saucisse (2) ou au moins un chapelet de saucisses (2),
dans lequel au moins un crochet de réception (8) est relié à une cellule de pesage (7) de telle manière que le poids de la au moins une saucisse ou du au moins un chapelet de saucisses au niveau du crochet de réception (8) peut être déterminé, **caractérisé en ce que** le dispositif de suspension (1) présente un élément d'entraînement (13) rotatif en prise avec les crochets de suspension (8), dans lequel les crochets de réception à peser peuvent être désaccouplés de l'élément d'entraînement (13) en vue du pesage.

2. Dispositif de suspension (1) selon la revendication 1, **caractérisé en ce que** le dispositif de suspension (1) présente un guidage de crochet (9, 11) au niveau duquel les crochets de réception (8) peuvent circuler sur leur trajet de circulation, dans lequel le guidage de crochet (11) est relié au moins par sections à une cellule de pesage (7).

3. Dispositif de suspension (1) selon au moins la revendication 2, **caractérisé en ce que** l'appareil de pesage (4) comprend une pièce de guidage (11) intégrée dans une section de pesage (A) du guidage de crochet (9) et découplée par rapport au guidage de crochet (9) et au niveau de laquelle les crochets de suspension (8) peuvent être guidés et maintenus dans la section de pesage (A), dans lequel la pièce de guidage (11) est reliée à la cellule de pesage (7).

4. Dispositif de suspension (1) selon au moins l'une quelconque des revendications 1 à 3, **caractérisé en ce que** le guidage de crochet (9) circulant présente dans la section de pesage (A) au moins un évidement (12) au sein duquel est insérée une section de guidage (11a, b) de la pièce de guidage (11), dans lequel la section de guidage (11a,b) est reliée à la cellule de pesage (7) par l'intermédiaire d'une section de liaison (11c), dans lequel, en particulier dans la section de pesage (A) du guidage de crochet (9), des évidements supérieur et inférieur (12a, b) sont prévus, au sein desquels sont insérées des sections de guidage (11a,b) respectives qui sont reliées entre elles par l'intermédiaire de la section de liaison (11c) ou, au sein de la section de pesage (A), le guidage de crochet (9) est complètement supprimé et est remplacé par la pièce de guidage (11) découplée.

5. Dispositif de suspension (1) selon au moins l'une quelconque des revendications 1 à 4, **caractérisé en ce que** la pièce de guidage (11) est mobile en vue d'un découplage dans une direction transversale à la direction de transport (T) des saucisses de telle manière que le crochet respectif s'éloigne de l'élément d'entraînement (13).

6. Dispositif de suspension (1) selon au moins l'une quelconque des revendications précédentes, **caractérisé en ce qu'**une section de pesage (A) présente une longueur telle que le poids de la au moins une saucisse peut être détecté au niveau d'au moins un crochet de suspension (8), de manière préférée au niveau de 1 à 50 crochets de suspension (8).

7. Dispositif de suspension (1) selon au moins l'une quelconque des revendications 1 à 6, **caractérisé en ce que** le dispositif de suspension (1) comprend une unité d'affichage et/ou de commande (14), en particulier un appareil d'entrée permettant de démarrer l'opération de pesage et/ou un appareil d'entrée permettant d'entrer un nombre de saucisses correspondant aux saucisses à peser ou permettant de confirmer que le nombre des saucisses à peser est exact et/ou qui indique qu'un pesage, en particulier une période de pesage, a lieu.

8. Machine de remplissage (10) avec un dispositif de suspension (1) selon au moins l'une quelconque des revendications 1 à 7, **caractérisée en ce que** l'appareil de pesage (4) peut transmettre des signaux de pesage à une unité d'évaluation (15), dans lequel le dispositif de commande (17) de la machine de remplissage est conçu de telle manière que les paramètres de remplissage du procédé de remplissage, en particulier la capacité de transport et/ou le volume de portionnage peuvent être adaptés en fonction des signaux de pesage détectés.

9. Procédé de fonctionnement permettant de produire des saucisses avec une machine de remplissage selon la revendication 8, dans lequel, pour au moins une saucisse (2) au niveau d'au moins un crochet de suspension (8), le poids est déterminé par l'intermédiaire de l'appareil de pesage (4) qui est intégré dans le dispositif de suspension,
des signaux de pesage sont transmis à une unité d'évaluation (15), et
des paramètres de remplissage, en particulier une capacité de transport, ou le volume de portionnage du procédé de remplissage sont adaptés en fonction des signaux de poids détectés, et le poids de la au moins une saucisse (2) est déterminé par l'intermédiaire d'une cellule de pesage (7) pendant qu'elle est suspendue à au moins un crochet (8), dans lequel le dispositif de suspension (1) présente un élément d'entraînement (13) circulant se trouvant en prise avec les crochets de suspension (8), dans lequel les crochets de réception à peser sont découplés de l'élément d'entraînement (13) en vue du pesage.

10. Procédé de fonctionnement selon la revendication 9, **caractérisé en ce qu'**un affichage (14) indique qu'un pesage doit être mis en œuvre et, en particulier, le nombre de saucisses à peser est entré par l'intermédiaire d'un appareil d'entrée (14) et/ou le nombre correct de saucisses à peser est entré ou confirmé par l'intermédiaire d'un appareil d'entrée (14), dans lequel un appareil par l'intermédiaire duquel l'opération de pesage est démarrée de manière manuelle est de manière préférée fourni.

11. Procédé de fonctionnement selon au moins l'une quelconque des revendications 9 à 10, **caractérisé en ce que** le pesage est mis en œuvre de manière automatique, de manière préférée à des intervalles de temps déterminés ou après une quantité de production définie.

12. Procédé de fonctionnement selon au moins l'une quelconque des revendications 9 à 11, **caractérisé en ce que** des signaux de poids et le nombre de saucisses pesées sont acheminés vers une unité d'évaluation (15), dans lequel un écart entre un poids déterminé pour un nombre déterminé de saucisses et une valeur de consigne est déterminé, et une adaptation des paramètres de remplissage n'intervient que si un écart maximal admissible n'est pas dépassé, dans lequel en particulier
l'écart déterminé est comparé à une première valeur limite et à une seconde valeur limite supérieure à la première valeur limite.
